# EUROPEAN PATENT APPLICATION

(11) **EP 1 650 161 A1**
(43) Date of publication of application: **26.04.2006**
(21) Application number: 04747575.1
(22) Date of filing: 15.07.2004
(51) Int. Cl.: C01B 31/02

(54) **CARBON NANOTUBE AND PRODUCTION METHOD THEREFOR AND CARBON NANOTUBE PRODUCING DEVICE**

(30) Priority: 15.07.2003 JP 2003197339
(71) Applicant: SONY CORPORATION, Tokyo 141-0001 (JP)
(72) Inventor: HUANG, Houjin, C/O SONY CORPORATION, Tokyo 141-0001 (JP); KAJIURA, Hisashi, C/o Sony Corporation, Tokyo 141-0001 (JP); ATA, Masafumi, C/o Sony Corporation, Tokyo 141-0001 (JP)
(74) Representative: Müller, Frithjof E.
(86) International application number: PCT/JP2004/010109
(87) International publication number: WO 2005/005317

(57) **Abstract**

A manufacturing method of carbon nanotubes capable of mass-producing DWCNT with high throughput and a low defect incidence ratio is provided. In a vacuum chamber (1), a first electrode (2) having a hollow (2a) and a rod-like second electrode (3) are included. Inert gas such as helium gas, nitrogen gas, and argon gas is introduced into the vacuum chamber (1), the atmosphere not containing hydrogen gas and oxygen gas is created, and in this state, arc discharge is generated between the first electrode (2) and the second electrode (3). The heat generated by arc discharge is moderately stored on the surface of the inner side surrounded by the first electrode (2), and temperatures on the surface of the first electrode (2) are maintained at the temperatures suitable for producing the DWCNT (8). Thereby, the thready DWCNT (8) can be continuously produced without pause starting with a catalyst (6).

## Description

### TECHNICAL FIELD

The present invention relates to a manufacturing method of carbon nanotubes suitable for, for example, field-effect emitter materials, electromagnetic wave prevention sheet materials and the like, manufacturing equipment used for it, and a carbon nanotube thereby manufactured.

### BACKGROUND ART

Carbon nanotubes (CNT) have recently attracted attention as a material having superior electric characteristics and mechanical characteristics needless to say in the so-called nanoelectronics field, but also as a material suitable for a field-effect emitter, reinforced composite materials with significantly high mechanical strength and the like, as long as defect of quality of material thereof is small (for example, refer to G. S. Choi, K. H. Son and D. J. Kim, Fabrication of high performance carbon nanotube field emitters, "Microelectronic Engineering," April 2003, Vol. 66, No. 1 to No. 4, pp. 206-212; and Cho YR, Lee JH, Hwang CS, et al., Characterizations of fine-pitched carbon nanotube pixels for field emitter arrays, "Japanese Journal of Applied Physics Part 1," March 2002, Vol. 41, No. 3A, pp. 1532-1535).

Specially, double-walled carbon nanotubes (DWCNT) show potential to become a material having electric characteristics and mechanical characteristic superior to single-walled carbon nanotubes (SWCNT) and multi-walled carbon nanotubes (MWCNT), and therefore DWCNT have recently attracted attention particularly.

As an example, take the case applying the carbon nanotubes to the field-effect emitter. By DWCNT, the threshold voltage of electron emission by electric field effect in the emitter can become a low voltage such as the voltage equal to or less than by SWCNT. In addition, the durability thereof can be as high as of MWCNT with three or more layers.

However, in order to utilize DWCNT for, for example, the field-effect emitter as above, it is necessary to further reduce the defect incidence rate as quality of material of DWCNT. If DWCNT has defect of quality of material, such defect may become a major factor to cause electric defect as a field-effect emitter. Further, such defect of quality of material of DWCNT may become a factor to lower durability. That is, it has been confirmed by the inventors of the present invention with various experiments that when a portion of such defect of quality of material contacts, for example, oxygen at high temperatures in the air, deterioration occurs intensively in the portion.

Further, since the so-called mass production technique has not been established for DWCNT, only a small amount of DWCNT can be produced in a long manufacturing time. Therefore, in the present circumstances, it is difficult to produce a massive amount of DWCNT with a high quality of material without defect in a short time.

At first, it was found that DWCNT was produced by arc discharge method. In recent years, it has been suggested that DWCNT can be produced by heat treatment method for producing DWCNT by heat treatment by using fullerene C₆₀ and SWCNT; CVD (Chemical Vapor Deposition) method by using a catalyst; or arc discharge method in the atmosphere containing hydrogen. However, in any of the foregoing manufacturing methods, only a small amount of DWCNT can be produced in a long time, and it has not been suggested on techniques capable of achieving mass production.

In heat treatment method, it is difficult to achieve throughput capable of addressing mass production. In CVD method and arc discharge method, there is a problem that it is difficult to mass-produce DWCNT with high purity. Furthermore, according to various experiments by the inventors of the present invention, in the conventional CVD method and arc discharge method using reactive gas such as hydrogen gas, there is a problem that produced DWCNT suffers damage from the reactive gas and therefore the defect incidence ratio is high. However, in such CVD method and arc discharge method, if reactive gas such as hydrogen gas is not used, DWCNT is not able to be produced in actuality. Therefore, it has been very difficult to reduce the defect incidence ratio.

It has been put forward that in order to selectively produce DWCNT by the conventional arc discharge method, the presence of reactive gas such as hydrogen gas is essential (Utchinson, J.L. et al., Carbon 2001). Further, it has been reported that DWCNT is not produced in the pure inert gas atmosphere such as helium gas (Saito, Y et al., "The Journal of Physical Chemistry B," 2003, Vol. 107, No. 4, pp. 931-934). According to such a report, DWCNT is not able to be produced without existence of hydrogen gas in the conventional arc discharge method.

As above, in the conventional manufacturing methods, it has been very difficult to reduce the defect incidence ratio. Further, it has not been suggested on manufacturing methods capable of addressing mass production in actuality.

### DISCLOSURE OF THE INVENTION

In view of the foregoing, it is an object of the present invention to provide a manufacturing method of carbon nanotubes capable of mass-producing DWCNT with high throughput and a low defect incidence ratio, manufacturing equipment used for it, and a carbon nanotube thereby manufactured.

A manufacturing method of carbon nanotubes according to the present invention is the manufacturing method in which a catalyst is arranged on the inner face of a first electrode having a hollow, a second electrode is arranged so that an end thereof is positioned inside the hollow of the first electrode, arc discharge is generated between the first electrode and the second electrode, and carbon nanotubes are produced starting with the catalyst by the arc discharge.

Carbon nanotube manufacturing equipment according to the present invention includes: a vacuum chamber having a first electrode in which a hollow is included and a catalyst is arranged on the inner face, and a second electrode arranged so that an end thereof is positioned inside the hollow of the first electrode; a gas introducing means for introducing inert gas into the vacuum chamber; and a voltage application means for applying a given voltage between the first electrode and the second electrode to generate arc discharge.

A first carbon nanotube according to the present invention is from 1 µm to 1 mm long, a second carbon nanotube according to the present invention is from 1 mm to 1 cm long, and a third carbon nanotube according to the present invention is from 1 cm to 1 m long. Further, a fourth carbon nanotube according to the present invention is from 1 m to 1 km long. Any of the foregoing carbon nanotubes is one continuous and thready carbon nanotube without a gap or a joint, and can be manufactured by the manufacturing equipment or the manufacturing method of the present invention.

In the manufacturing method of carbon nanotubes of the present invention or the carbon nanotube manufacturing equipment of the present invention, arc discharge is generated between the first electrode having the hollow and the second electrode to produce carbon nanotubes. The heat generated by arc discharge is moderately stored inside the hollow of the first electrode, and temperatures in the vicinity of the inner face of the first electrode, that is, temperatures of the catalyst arranged on the first electrode are maintained at the temperatures suitable for producing carbon nanotubes. Thereby, while arc discharge is continued, carbon nanotubes are continuously produced in a state of one continuous string without pause starting with the catalyst.

Furthermore, in the manufacturing method of carbon nanotubes of the present invention or the carbon nanotube manufacturing equipment of the present invention, the atmosphere including only inert gas such as helium gas, nitrogen gas, and argon gas is used. Thereby, carbon nanotubes are produced with high throughput even in the atmosphere not containing hydrogen gas and oxygen gas. In particular, in the case of double-walled carbon nanotubes, in the atmosphere not containing hydrogen gas and oxygen gas, the carbon nanotubes are produced with the low defect incidence ratio.

### BRIEF DESCRIPTION OF THE DRAWINGS

Fig. 1 is a view showing an outline configuration of manufacturing equipment of DWCNT according to an embodiment of the present invention;
Fig. 2 is a view showing a model of a state in which thready DWCNT is produced;
Fig. 3 is a view showing an example of recovery equipment of DWCNT;
Fig. 4 is a view showing another example of recovery equipment of DWCNT;
Fig. 5 is a graph showing results of TGA (TG analysis) of thready DWCNT manufactured by an example before and after refinement thereof;
Fig. 6 is a graph showing change rates of TG in the results of TGA (TG analysis) of the thready DWCNT manufactured by the example before and after refinement thereof
Fig. 7 is a macrophotograph of DWCNT produced in a state of string from the surface of a first electrode;
Fig. 8A is a macrophotograph by an SEM of DWCNT produced from the surface of the first electrode;
Fig. 8B is a photograph of DWCNT with the expansion ratio higher than of Fig. 8A;
Fig. 9A is a macrophotograph shot by the TEM after acetone-treating thready DWCNT manufactured by the example;
Fig. 9B is a macrophotograph of one DWCNT from Fig. 9A; and
Fig. 9C is a cross section macrophotograph of a bundle of DWCNT of Fig. 9A.

### BEST MODE FOR CARRYING OUT THE INVENTION

An embodiment of the present invention will be hereinafter described in detail with reference to the drawings.

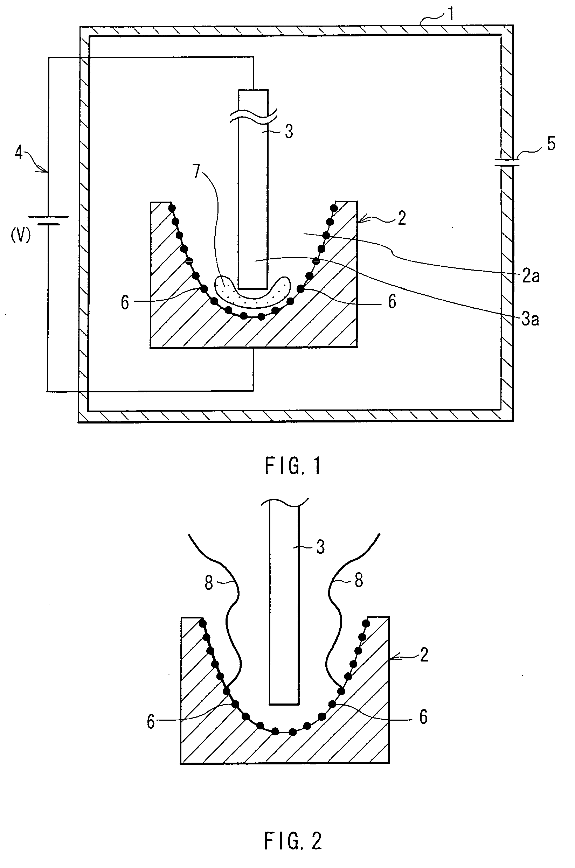

Fig. 1 shows an outline configuration of equipment used for manufacturing a carbon nanotube according to an embodiment of the present invention, for example, double walled carbon nanotubes (DWCNT).

The double-walled carbon nanotube (DWCNT) manufacturing equipment includes a first electrode 2 having a hollow 2a and a rod-like second electrode 3 for arc discharge in a vacuum chamber 1. Here, in the first electrode 2, the hollow 2a has a bowl-like shape. The first electrode 2 is installed so that the hollow 2a is positioned upward. The second electrode 3 is vertically arranged so that an end thereof 3a is positioned inside the hollow 2a of the first electrode 2. Outside of the vacuum chamber 1, an electric source (direct current electric source) 4 for applying a given voltage between the first electrode 2 and the second electrode 3 is installed. The vacuum chamber 1 is depressurized by an unshown air displacement pump. Further, inert gas such as helium gas, nitrogen gas, and argon gas is introduced in the vacuum chamber 1 through a gas entrance 5.

In this embodiment, in manufacturing DWCNT, first, the vacuum chamber 1 is filled with inert gas of, for example, only He (helium), and then depressurized. Then, in such a depressurized atmosphere, arc discharge is performed. That is, in this embodiment, the atmosphere not containing hydrogen and oxygen is used.

The first electrode 2 is formed of carbon (C), and used as a cathode in direct current arc discharge. In the first electrode 2, a catalyst 6 becoming a starting point of producing DWCNT is dispersed and mixed or supported on the surface (wall face) of the hollow 2a. The end portion 3a of the second electrode 3 is surrounded by the wall face on which the catalyst 6 is dispersed. As the catalyst 6, for example, metal fine particles composed of metal sulfide such as FeS (iron sulfide) are used. The catalyst 6 may be mixed in the second electrode 3.

As above, in this embodiment, the first electrode 2 surrounds the end portion 3a of the second electrode 3. Therefore, surface temperatures due to the heat generated by the arc discharge can be maintained at the temperature at which DWCNT can be produced.

It is enough that the first electrode. 2 has a hollow and has a shape capable of storing the heat generated by arc discharge in a certain space region in the vicinity of the catalyst arranged on the electrode surface. Therefore, the shape of the first electrode 2 is not limited to the bowl-like shape, but may be cone (circular cone)-like shape or closed surface-like shape having an opening on only one side. In addition, in the case of the shape having an opening on only one side, rectangular solid-like (box-like) shape or cylinder (longitudinal bore)-like shape can be applied.

Meanwhile, the second electrode 3 is also formed of carbon (C). The second electrode 3 is used as an anode in direct current arc discharge, and used as a supply source of the material (carbon) for producing DWCNT. The outer shape of the second electrode 3 can be, for example, cylinder-like shape or rectangular column-like shape.

In the manufacturing equipment of this embodiment, in the vacuum chamber 1 maintained in the atmosphere not containing hydrogen and oxygen by using, for example, helium (He) gas as buffer gas, direct current arc discharge is performed between the first electrode 2 and the second electrode 3. By the direct current arc discharge, a direct current arc plasma 7 is generated, electrical energy of direct current arc discharge is changed into thermal energy, and carbon of the second electrode 3 is supplied to the surface of the first electrode 2 as a material for producing DWCNT.

As shown in Fig. 2 as a model, on the surface of the first electrode 2, carbon supplied by direct arc discharge becomes a thready DWCNT 8 starting with the catalyst 6. While direct current arc discharge is continued, generation of the DWCNT 8 is stably continued without pause, if supply of carbon or sufficient direct current arc discharge is not inhibited by the fact, for example, that the DWCNT 8 is pooled in the internal space (hollow 2a) of the first electrode 2. Therefore, one continuous thready DWCNT8 without a gap or a joint can be easily obtained.

While the length of the DWCNT 8 manufactured as above is not particularly limited, for example, the DWCNT 8 being from 1 µm to 1 mm long, being from 1 mm to 1 cm long, being from 1 cm to 1 m long, or being from 1 m to 1 km long can be obtained. Further, for example, it is possible to obtain the DWCNT 8 with shorter length by cutting the DWCNT 8 being from 1 m to 1 km long.

The DWCNT 8 being from 1 µm to 1 mm long is available as a paint base material used for FED (Field Emission Display) and the like.

The DWCNT 8 being from 1 mm to 1 cm long is available as a base material of, for example, an electromagnetic wave absorbent or a nanodevice.

The DWCNT 8 being from 1 cm to 1 m long is available for nanowiring.

The DWCNT 8 being from 1 m to 1 km long has promising wide-scale applications as a construction and civil engineering material, a structural material, a machine material, equipment parts or the like commencing with a wire for supporting the bridge and a rope material of crane. The conventional wire, which supports the foregoing kind of structure or is used as a part of equipment, has a large diameter, so that whole structures or whole equipment is also jumboized. Meanwhile, since the DWCNT 8 of the present invention has a high rigidity, using the DWCNT 8 is advantageous for obtaining a small sized and light weight structure or equipment. Further, when the DWCNT 8 having conductivity is utilized for a cable transmitting electric power, high electric power can be transmitted by bundling nanotubes even with the nanotube wire with a small diameter. In addition, since the DWCNT 8 is light and rigid, the distance between steel towers supporting the power cable can be long, about 1 km.

As above, in this embodiment, the thready DWCNT 8 can be continuously and stably produced without pause starting with the catalyst 6. Therefore, it becomes possible to address mass production of DWCNT. Further, by controlling continuous time of direct current arc discharge, the length of the continuously produced thready DWCNT 8 can be a desired length, such as 1 mm, 1cm, 1m, further long 1 km, or further longer length.

Further, in this embodiment, the thready DWCNT 8 can be produced in the atmosphere not containing hydrogen gas and oxygen gas. Therefore, the defect incidence ratio due to existence of reactive gas such as hydrogen gas and oxygen gas, which is highly reactive to the DWCNT 8 can be significantly reduced compared to the case of the conventional and general manufacturing methods such as CVD method and arc discharge method, and the DWCNT 8 with high reliability and high durability can be manufactured.

### [Modification 1]

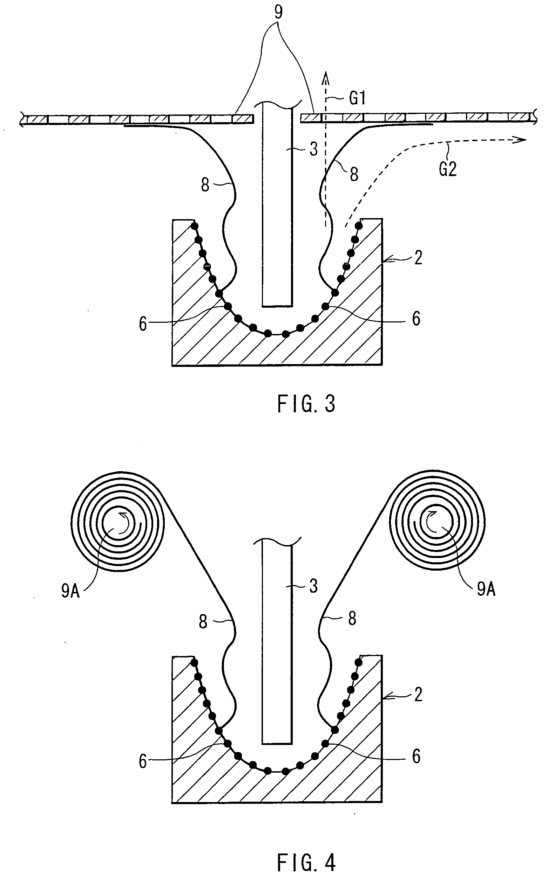

Fig. 3 shows Modification 1 of the present invention. Manufacturing equipment of this modification has the same configuration as of the manufacturing equipment of the foregoing embodiment, except that a mesh member 9 as recovery equipment for recovering the produced DWCNT 8 is included. Therefore, for the same components, the same symbols are affixed thereto and descriptions thereof are omitted.

The mesh member 9 facilitates recovery of the DWCNT 8 by producing the DWCNT 8 in approximately linear state along the surface of the mesh member 9 without tangling of the respective DWCNT 8 each other by gas pressures G1 and G2 generated by convection of ambient gas. As a material of the mesh member 9, there is no limitation particularly as long as the material is not deformed even when exposed in the high temperature atmosphere such as about 1000 deg C. For example, tungsten, iron, an alloy containing at least one of tungsten and iron, ceramics, or ceramics complex with a metal such as iron can be cited. Mesh texture of the mesh member 9 is preferably the texture easily tangled with the DWCNT 8. That is, as described below, it is preferable that setting is made so that while the DWCNT 8 is pressed onto the mesh member 9 by passing atmosphere gas through the mesh member 9, the DWCNT 8 does not pass the mesh of the mesh member 9. For example, the diameter of the mesh can be selected, for example, in the range from 100 µm to 5 cm.

The mesh member 9 is preferably arranged apart from the first electrode 2. Further, the distance between the mesh member 9 and the opening of the electrode 2 is preferably the distance, with which discharge by the electric field is not generated between the mesh member 9 and the opening of the first electrode 2 and the gas pressures G1 and G2 act on the mesh member 9, for example, from 1 cm to 50 cm. Further, the mesh member 9 may be movable as appropriate as the amount of the DWCNT 8 is increased. The mesh member 9 is not necessarily installed horizontally as shown in Fig. 3, but may be installed, for example, so that the cross section becomes V-shaped.

In this modification, when the DWCNT 8 is continuously produced while arc discharge is generated between the first electrode 2 and the second electrode 3 as in the foregoing example, as indicated by arrows of Fig. 3, the gas pressures G1 and G2 are generated by convection of atmosphere gas through the mesh member 9. By the gas pressure G1, the DWCNT 8 is pressed onto the surface of the mesh member 9. Further, by the gas pressure G2, the force to pull the DWCNT 8 in the direction apart from the second electrode 3. Therefore, the DWCNT 8 is extended in approximately linear state along the surface of the mesh member 9, and the DWCNT 8 is not tangled with itself or other DWCNT 8. Consequently, the DWCNT 8 being, for example, from 1 cm to 1 m long as described in the foregoing embodiment is easily and surely produced.

In order to recover the DWCNT 8 produced in a state of being extended in approximately linear state with such approximately linear state maintained, it is more preferable that the DWCNT 8 growing along the mesh member 9 is recovered outside the first electrode 2. Thereby, there is no risk that continuous production of the DWCNT 8 is not inhibited in the middle by constraint of the volume, dimensions or the like of the vacuum chamber 1 or the first electrode 2, and it becomes possible to prevent occurrence of tangling of the DWCNT 8 with itself and other DWCNT 8.

In this modification, the mesh member 9 is included as recovery equipment. Therefore, the DWCNT 8 with a very long length can be easily and surely produced, and recovery of the DWCNT 8 is facilitated by the mesh member 9, which is advantageous to mass production. Further, production continuation time is not constrained by the volume, the dimensions and the like of the vacuum chamber 1 and the first electrode 2, and the thready DWCNT 8 can be easily and continuously produced without pause in the middle.

It is enough that the recovery equipment of this modification has openings through which atmosphere gas can pass, and the recovery equipment is not limited to the mesh member 9. For example, stick-like recovery equipment, bar-like recovery equipment, or grid-like equipment may be used.

### [Modification 2]

Fig. 4 shows another example of the recovery equipment. In this modification, roller-type recovery equipment for recovering the DWCNT 8 while winding the DWCNT 8 by absorbing the DWCNT 8 onto the surface of a rotating roller 9A is used. Thereby, even the DWCNT 8 with a very long length from 1 m to 1 km can be easily recovered, which is farther advantageous to mass production.

The distance between the roller 9A and the opening of the first electrode 2 is preferably, for example, from 1 cm to 50 cm as in Modification 1. Further, the roller 9A may be movable as appropriate as the amount of the wound DWCNT 8 is increased. Further, an unshown guide member or an unshown guide roller may be provided between the roller 9A and the first electrode 2. The number of the roller 9A is not limited to the number shown in Fig. 4, but three or more rollers 9A may be provided. Further, it is possible that the mesh member 9 is combined with the roller 9A, and the DWCNT 8 is guided to the roller 9A by using the mesh member 9 as a guide member.

### [Example]

Next, descriptions will be given of a specific example of the double-walled carbon nanotube manufacturing equipment as above and the manufacturing method.of double-walled carbon nanotubes by using it.

As described in the foregoing embodiment, the thready DWCNT 8 was produced starting with the catalyst 6 on the surface of the internal side of the first electrode 2 facing to the second electrode 3.

In this example, as the first electrode 2, a bowl-like electrode surrounding the second electrode 3 as shown in Fig. 1, containing NiS (nickel sulfide), CoS (cobalt sulfide), and FeS (iron sulfide) at a ratio of 1:1:1 and also containing a slight amount of (1 wt%) Sn (tin) as the catalyst 6 was used. As the second electrode 3, a carbon rod with the section size of 15 x 15 mm being 250 mm long, and containing 4.5 wt% of Ni (nickel), Co (cobalt), and FeS (iron sulfide) at a ratio of 12:3:5 was used. A current in direct current arc discharge by the electric source 4 was maintained at 180 A.

The mesh member 9 was arranged in a position apart 30 cm from the opening of the first electrode 2 in the vertical direction as recovery equipment, and the thready DWCNT 8 produced from the first electrode 2 was thereby recovered. As buffer gas, He (helium) with purity of 99.9999% was used, and the atmosphere in the vacuum chamber 1 in producing the DWCNT 8 was maintained at 80 [kPa].

Under such manufacturing conditions, the DWCNT 8 was produced in actuality. Then, the produced DWCNT 8 was refined.

Specifically, the produced DWCNT 8 was stirred in a 3N nitrogen oxide solution for 24 hours at room temperatures. After that, the resultant was centrifugalized or placed in an ultrasound cleaner several times, and impurity was removed. Then, the resultant was dried for 10 hours at 60 deg C.

In order to observe the DWCNT 8 produced as above by TEM equipment (HRTEM, HF2000, manufactured by Hitachi), acetone treatment and ultrasonic treatment were further provided. Then, observation and photo-shoot of the resultant by the TEM were performed. Further, by using TGA equipment (Perkin-Elmer, Phylis 1 TGA), TGA (Temperature Weight Analysis) was performed. The measurement ramping rate of the TGA was 5 deg C/min.

Next, descriptions will be given of the DWCNT 8 obtained as above.

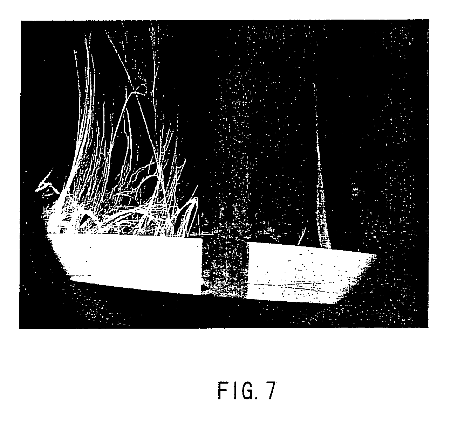

Fig. 7 is a macrophotograph of the thready DWCNT 8 produced from the surface of the first electrode 2. The photograph was obtained by shooting the state observed from the observation window of the vacuum chamber 1, 10 minutes after the start of direct current arc discharge. The thready DWCNT 8 is seen like white smoke, which seems to be originated out of radiance by strong UV (ultraviolet) rays generated by high temperatures and direct current arc discharge.

In several minutes after the start of direct current arc discharge, a bundle of the DWCNT 8 being about several cm long started to be produced starting with the catalyst 6 on the surface of the first electrode 2. Many of these thready DWCNT 8 rapidly grew to a length of 30 cm or more. Finally, the amount of the DWCNT 8 became abundant, which filled the space between the first electrode 2 and the mesh member 9. When the conditions were adjusted, 20 minutes after the start of direct current arc discharge, from 300 to 500 mg of the DWCNT 8 was recovered. It meant that compared to the case manufacturing the same amount of DWCNT according to the conventional manufacturing method of DWCNT by catalyst CVD method, the DWCNT 8 could be manufactured at a significantly high speed according to the manufacturing method of this example.

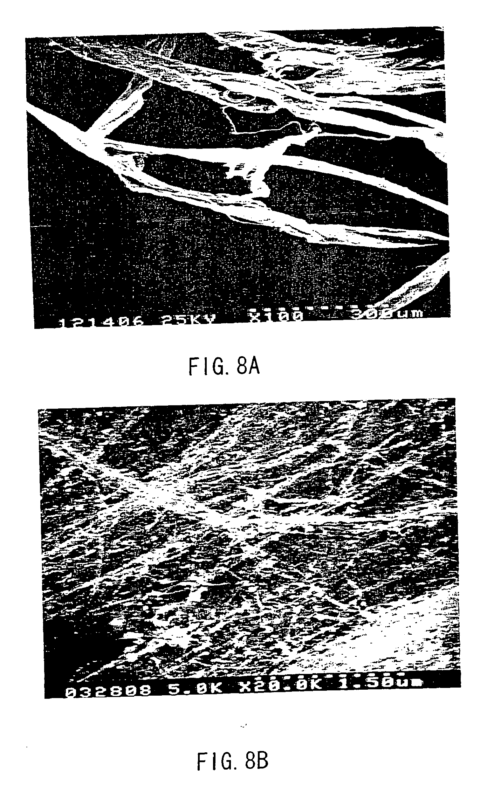

Fig. 8A is a macrophotograph by an SEM of the DWCNT 8 produced from the surface of the first electrode 2. The diameter of single thready DWCNT 8 shown in the macrophotograph is from 1 to 100 µm. Compared to the DWCNT 8 obtained by the conventional and general manufacturing method, the DWCNT 8 according to this example had significantly high mechanical strength. Further, Fig. 8B is a macrophotograph by the SEM obtained by shooting the DWCNT 8 according to this example at a magnification ratio higher than of Fig. 8A. According to this photograph, it is shown that a great amount of thready DWCNT 8 being from several nm to several 10 nm in diameter and the bundles thereof are roughly aligned.

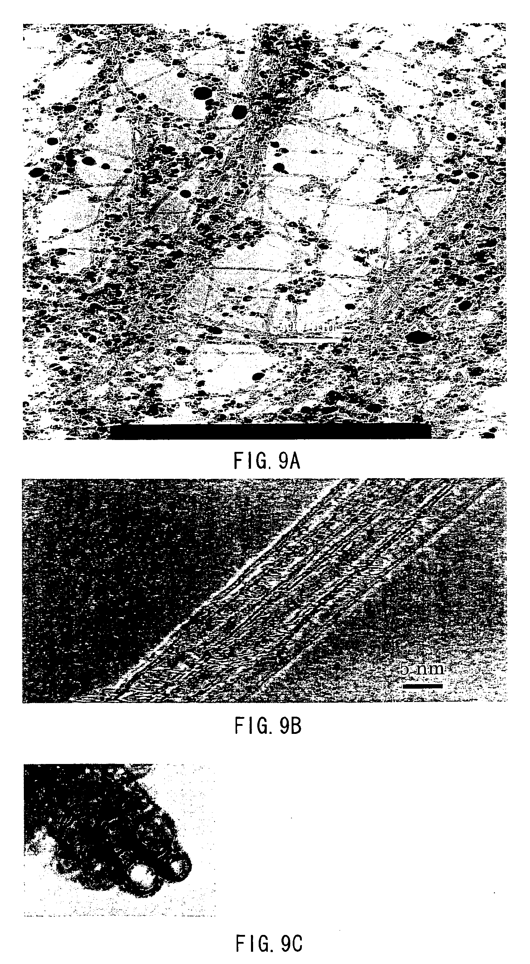

Fig. 9A is a macrophotograph shot by the TEM after acetone treatment of the thready DWCNT 8 manufactured by this example. In this exemplary sample, metal particles and the like were significant. Even after ultrasonic treatment was performed, only a very small amount of amorphous carbon existed. This fact was quite a contrast to the case of the DWCNT 8 obtained by the conventional and general arc discharge method.

Fig. 9B is a macrophotograph obtained by shooting one of the thready DWCNT 8 manufactured according to this example by the TEM. Fig. 9C is a macrophotograph obtained by shooting a cross section of a bundle of thready DWCNT 8 manufactured by this example by the TEM. In the DWCNT 8 shown in the macrophotograph, a diameter of single DWCNT 8 was from 2 to 7 nm as of the DWCNT 8 manufactured by the general and conventional CVD method, arc discharge method or the like. Further, the distance between the inner layer and the outer layer in the DWCNT 8 shown in this macrophotograph was from 0.36 to 0.42 nm, which was slightly larger compared to the typical value in the case of graphite carbon or MWCNT, about 0.34 nm.

The yield of the thready DWCNT 8 produced to the raw material amount of carbon was assumed to be 50% or more.

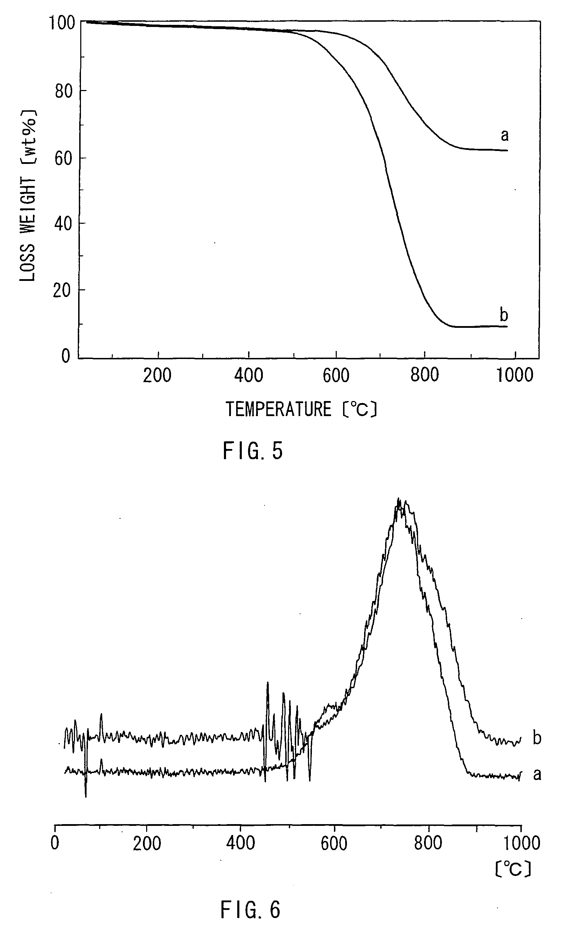

Figs. 5 and 6 are characteristics views showing results of TGA (TG analysis) of the thready DWCNT 8 manufactured by this example before and after refinement thereof. In Figs. 5 and 6, a represents before oxidation treatment, and b represents after oxidation treatment, respectively.

It was found that in the thready DWCNT 8 manufactured by this example, even the DWCNT 8 was not refined and contained 60 wt% of a metal catalyst component, the burn-out starting temperature was in the vicinity of 600 deg C, which was very high burn-out starting temperature compared to 300 deg C, the typical example of the burn-out starting temperature of the DWCNT manufactured by the conventional and general arc discharge method by using the second electrode 3 used in this example. Thereby, it was obvious that in the DWCNT 8 manufactured by this example, the metal catalyst component contained in the unrefined DWCNT 8 did not lower the burn-out starting temperature of the DWCNT 8.

Further, after the thready DWCNT 8 manufactured by this example was provided with simple oxidation treatment at room temperatures, the metal catalyst component was decreased down to 6.8 wt%. This suggests that most metal catalyst component contained was contained in the DWCNT 8 only to the degree that the metal catalyst component could be easily removed, but the metal catalyst component was not firmly contained in the DWCNT 8 to the degree that the metal catalyst component could not be removed.

Further, in the thready DWCNT 8 manufactured by this example, the peak of the weight change rate of the TGA analysis result was in the vicinity of 720 deg C even after oxidation treatment. Therefore, it was found that the oxidation resistance was hardly changed even after oxidation treatment.

Here, the inventors of the present invention performed an experiment for producing SWCNT in which the manufacturing equipment as used in manufacturing the foregoing DWCNT 8 was used, but the catalyst 6 was changed to the catalyst for producing SWCNT. In the result, it was presumed that in the manufacturing method using the first electrode 2 as above, even when defect arose in SWCNT to be produced, there was a function to self-cure the defect. Further, it was confirmed that by producing SWCNT in the atmosphere without reactive gas such as hydrogen gas and oxygen gas and using the first electrode 2 having the hollow 2a, the defect incidence ratio of SWCNT to be produced could be significantly reduced down to low level.

On the contrary, as a comparative example, an experiment for producing the DWCNT 8 was tried by performing direct current arc discharge under conditions such as a catalyst as in this example, except that the conventional and general rod-like cathode was used instead of the first electrode 2. Almost all CNT obtained was SWCNT, and only slight amount of the DWCNT 8 was produced.

From the foregoing, it was presumed that performing direct current arc discharge in the atmosphere without reactive gas such as hydrogen gas and oxygen gas by using the first electrode 2 as used in this example largely contributed to stable and continuous production of the thready DWCNT 8.

While the present invention has been described with reference to the embodiment and the example, the present invention is not limited to the foregoing embodiment and the example, and various modifications may be made. For example, in the foregoing embodiment and the example, the case manufacturing the DWCNT 8 has been described. However, the manufacturing method or the carbon nanotube manufacturing equipment according to the present invention can be applied not only to the double-walled carbon nanotubes, but also to manufacturing the single walled carbon nanotubes, the multi-walled carbon nanotubes or the like.

Further, in the foregoing embodiment and the example, the configuration of the manufacturing equipment has been described specifically. However, all components described in the foregoing embodiment such as recovery equipment are not necessarily included, or other components such as an additionally necessary maintenance window may be further included.

As above, according to the manufacturing method or the carbon nanotube manufacturing equipment of this embodiment and this example, the defect incidence ratio of DWCNT or the like can be significantly reduced than the defect incidence ratio of DWCNT or the like manufactured by the conventional manufacturing method or the conventional manufacturing equipment, and DWCNT can be stably and continuously manufactured.

As described above, according to the manufacturing method of carbon nanotubes of the present invention or the carbon nanotube manufacturing equipment of the present invention, the catalyst is arranged on the inner face of the first electrode having a hollow, the second electrode is arranged so that the end thereof is positioned inside the hollow of the first electrode or in the vicinity thereof, and arc discharge is generated between the first electrode and the second electrode. Therefore, the heat generated by arc discharge is stored in the hollow of the first electrode, and temperatures on the surface on which the catalyst is arranged are maintained at the temperatures suitable for producing carbon nanotubes. Therefore, while direct current arc discharge is continued, carbon nanotubes are continuously produced in a state of one continuous string without pause starting with the catalyst of the pouched electrode. Thereby, carbon nanotubes can be mass-produced stably.

In particular, when production is made in the inert gas atmosphere such as helium in a state not containing hydrogen gas and oxygen gas, the defect incidence ratio of carbon nanotubes can be significantly decreased compared to the defect incidence ratio of the carbon nanotubes manufactured by the conventional manufacturing method or the conventional manufacturing equipment.

Further, according to the carbon nanotube of the present invention, the length thereof is 1 mm or more, more desirably 1 cm or more, much more preferably 1 m or more, which has no gap or joint. Therefore, the carbon nanotube can be utilized for the application requiring a long fibriform carbon nanotube, various applications necessary to utilize a carbon nanotube to be cut in a desired length and the like.

## Claims

1. A manufacturing method of carbon nanotubes for producing carbon nanotubes starting with a catalyst, wherein the catalyst is arranged on the inner face of a first electrode having a hollow, a second electrode is arranged so that an end thereof is positioned inside the hollow of the first electrode, and arc discharge is generated between the first electrode and the second electrode.

2. A manufacturing method of carbon nanotubes according to claim 1, wherein double-walled carbon nanotubes are grown as the carbon nanotubes.

3. A manufacturing method of carbon nanotubes according to claim 1, wherein single-walled carbon nanotubes are grown as the carbon nanotubes.

4. A manufacturing method of carbon nanotubes according to claim 1, wherein the arc discharge is performed in the depressurized atmosphere including only inert gas.

5. A manufacturing method of carbon nanotubes according to claim 4, wherein the arc discharge is performed in the depressurized atmosphere of helium gas, nitrogen gas, or argon gas.

6. A manufacturing method of carbon nanotubes according to claim 1, wherein the first electrode is a bowl-like electrode and the second electrode is a rod-like electrode.

7. A manufacturing method of carbon nanotubes according to claim 1, wherein while arc discharge is generated between the first electrode and the second electrode, carbon nanotubes are continuously produced.

8. Carbon nanotube manufacturing equipment comprising:
a vacuum chamber having a first electrode in which a hollow is included and a catalyst is arranged on the inner face, and a second electrode arranged so that an end thereof is positioned inside the hollow of the first electrode;
a gas introducing means for introducing inert gas into the vacuum chamber; and
a voltage application means for applying a given voltage between the first electrode and the second electrode to generate arc discharge.

9. Carbon nanotube manufacturing equipment according to claim 8, wherein the inert gas is helium, nitrogen, or argon gas.

10. Carbon nanotube manufacturing equipment according to claim 9, wherein the first electrode is a bowl-like electrode.

11. Carbon nanotube manufacturing equipment according to claim 8 comprising a recovery means for recovering carbon nanotubes to be produced.

12. A carbon nanotube being from 1 µm to 1 mm long.

13. A carbon nanotube being from 1 mm to 1 cm long.

14. A carbon nanotube being from 1 cm to 1 m long.

15. A carbon nanotube being from 1 m to 1 km long.
